# EUROPÄISCHE PATENTANMELDUNG

(11) **EP 1 265 004 A2**
(43) Veröffentlichungstag der Anmeldung: **11.12.2002**
(21) Anmeldenummer: 02010409.7
(22) Anmeldetag: 08.05.2002
(51) Int. Cl.: F16H 3/089

(54) **Getriebe für ein Kraftfahrzeug**

(30) Priorität: 07.06.2001 DE 10127752
(71) Anmelder: Bayerische Motoren Werke Aktiengesellschaft, 80809 München (DE)
(72) Erfinder: Körber, Martin, 85375 Neufahrn (DE)

(57) **Zusammenfassung**

Es betrifft ein Getriebe für ein Kraftfahrzeug, zur Drehmoment- und Drehzahlanpassung zwischen einem Antriebsmotor und einem Achsgetriebe des Kraftfahrzeugs. Das Getriebe besitzt mindestens zwei Getriebewellen, eine Eingangswelle (1) und eine Ausgangswelle (2), mit mehreren Zahnradsätzen (8,9) unterschiedlicher Untersetzung, von denen jeweils ein Zahnrad als Festrad (3,4) und das andere Zahnrad als Losrad (5,6) auf der Eingangs- (1) oder Ausgangswelle (2) gehalten ist. Dabei kann jeweils das Losrad (5,6) zur Drehmomentübertragung mit der zugehörigen Getriebewelle über eine, insbesondere als schaltbarer Freilauf (13,20,21) ausgebildete, schaltbare Kupplung formschlüssig verbunden werden. Eine durch Elektroviskose in ihrem Reibverhalten steuerbare Flüssigkeitsreibkupplung mit der schaltbaren Kupplung so zusammenwirkt, dass die schaltbare Kupplung die formschlüssige Verbindung zwischen Losrad (5,6) und zugehöriger Getriebewelle erst dann herstellt, wenn bedingt durch den Einsatz der Flüssigkeitsreibkupplung, der Betrag der Relativgeschwindigkeit zwischen Losrad und zugehöriger Getriebewelle unterhalb eines festgelegten Wertes liegt.

## Beschreibung

Die Erfindung betrifft ein Getriebe für ein Kraftfahrzeug nach dem Oberbegriff des Hauptanspruchs.

Die deutsche Patentanmeldung 100 63 848 beschreibt ein Getriebe für ein Kraftfahrzeug, das zur Drehmoment- und Drehzahlanpassung zwischen einem Antriebsmotor und einem Achsgetriebe des Kraftfahrzeugs verwendet wird. Das Getriebe besitzt mindestens zwei Getriebewellen, eine Eingangswelle und eine Ausgangswelle. Mehrere Zahnradsätze unterschiedlicher Untersetzung bestehen jeweils aus einem Zahnrad als Festrad und aus einem anderen Zahnrad als Losrad auf der Eingangs- oder Ausgangswelle. Jeweils das Losrad ist zur Drehmomentübertragung mit der zugehörigen Getriebewelle über eine schaltbare Kupplung, die als schaltbarer Freilauf ausgeführt ist, verbindbar.

Solche schaltbaren Freiläufe an sich sind Stand der Technik und zum Beispiel in der WO 99/28644 und der WO 99/28645 beschrieben. Werden die vom Stand der Technik bekannten Synchronschaltelemente durch schaltbare Freiläufe, insbesondere oben genannter Art, ersetzt, so entsteht in Verbindung mit bekannten Getriebekonzepten mit Zugkraftunterstützung ein Getriebe, das einfach aufgebaut ist und ohne aufwendige Steuereinrichtung ohne Zugkraftunterbrechung geschaltet werden kann.

Der Einsatz eines schaltbaren Freilaufs ermöglicht einen Gangwechsel derart, dass ein Gang zugeschaltet werden kann, ohne dass der vorherige Gang ausgeschaltet worden ist. Es muss nur am abzulösenden Gang der Freilauf in Überholrichtung freigeschaltet werden.

Wenn bei den vorgenannten Getrieben mit schaltbaren Freiläufen die Gänge ohne Zugkrafteinbruch innerhalb sehr kurzer Zeit gewechselt werden, hat dies in der Regel eine Verschlechterung des Komforts durch den sogenannten Schaltschlag (auftreten von Spitzendrehmomenten) zur Folge.

Dieser Nachteil führt zu der Aufgabe der Erfindung, ein Getriebe für ein Kraftfahrzeug bereitzustellen, bei dem die Gänge ohne Zugkraftunterbrechung innerhalb sehr kurzer Zeit gewechselt werden können und das dabei einen Schaltvorgang ermöglicht, der als komfortabel empfunden wird.

Die Aufgabe wird erfindungsgemäß mit den kennzeichnenden Merkmalen des Anspruchs 1 gelöst. Eine weitere Ausgestaltung der Erfindung ergibt sich aus dem Unteranspruch.

Die Erfindung betrifft ein Getriebe für ein Kraftfahrzeug, zur Drehmoment-und Drehzahlanpassung zwischen einem Antriebsmotor und einem Achsgetriebe des Kraftfahrzeugs. Das Getriebe besitzt mindestens zwei Getriebewellen, eine Eingangswelle und eine Ausgangswelle, mit mehreren Zahnradsätzen unterschiedlicher Untersetzung, von denen jeweils ein Zahnrad als Festrad und das andere Zahnrad als Losrad auf der Eingangs- oder Ausgangswelle gehalten ist. Dabei kann jeweils das Losrad zur Drehmomentübertragung mit der zugehörigen Getriebewelle über eine, insbesondere als schaltbarer Freilauf ausgebildete, schaltbare Kupplung formschlüssig verbunden werden. Die Erfindung ist dadurch gekennzeichnet, dass eine durch Elektroviskose in ihrem Reibverhalten steuerbare Flüssigkeitsreibkupplung mit der schaltbaren Kupplung so zusammenwirkt, dass die schaltbare Kupplung die formschlüssige Verbindung zwischen Losrad und zugehöriger Getriebewelle erst dann herstellt, wenn bedingt durch den Einsatz der Flüssigkeitsreibkupplung, der Betrag der Relativgeschwindigkeit zwischen Losrad und zugehöriger Getriebewelle unterhalb eines festgelegten Wertes liegt.

Mit Elementen zur Übertragung von Drehmoment, deren Funktion auf der Wirkung elektroviskoser Flüssigkeiten beruht, gekoppelt mit schaltbaren Kupplungen, insbesondere jeweils einem schaltbaren Freilauf mit einer Flüssigkeitsreibkupplung, kann vorteilhafterweise ein Getriebe für ein Kraftfahrzeug bereitgestellt werden, bei dem die Gänge ohne Zugkraftunterbrechung innerhalb sehr kurzer Zeit gewechselt werden können und das dabei einen Schaltvorgang ermöglicht, der als komfortabel empfunden wird.

Solche Elemente können dazu dienen, den Schaltschlag durch geregeltes Aktivieren/Deaktivieren zu bekämpfen. Ein solches Element kann auch zur Dämpfung von Drehschwingungen benutzt werden: Geregeltes Aktivieren/Deaktivieren kann dazu dienen, Drehschwingungen zu dämpfen oder Spitzendrehmomente abzubauen.

Die elektrischen Leistungen zur Aktivierung elektroviskoser Flüssigkeiten sind sehr klein. Ebenso kann ein schaltbarer Freilauf mit geringem Energieaufwand elektrisch aktiviert werden. Es ergeben sich dadurch auch Wirkungsgradvorteile gegenüber Lamellenkupplungen nach dem Stand der Technik.

Bei einer bevorzugten Ausführung der Erfindung ist die Flüssigkeitsreibkupplung eine Lamellenkupplung, was einen einfachen Aufbau des Getriebes ermöglicht.

Ein bevorzugtes Ausführungsbeispiel der Erfindung ist in der nachfolgenden Beschreibung mit der zugehörigen Zeichnung dargestellt. Es zeigen:
- **Figur 1**: eine schematische Prinzipdarstellung eines durch schaltbare Freiläufe schaltbaren Getriebes mit zwei Schaltstufen gemäß dem Stand der Technik und
- **Figur 2**: eine schematische Darstellung eines Elements zur Übertragung von Drehmoment gemäß der Erfindung, zur Verwendung in einem Getriebe zum Beispiel nach Figur 1.

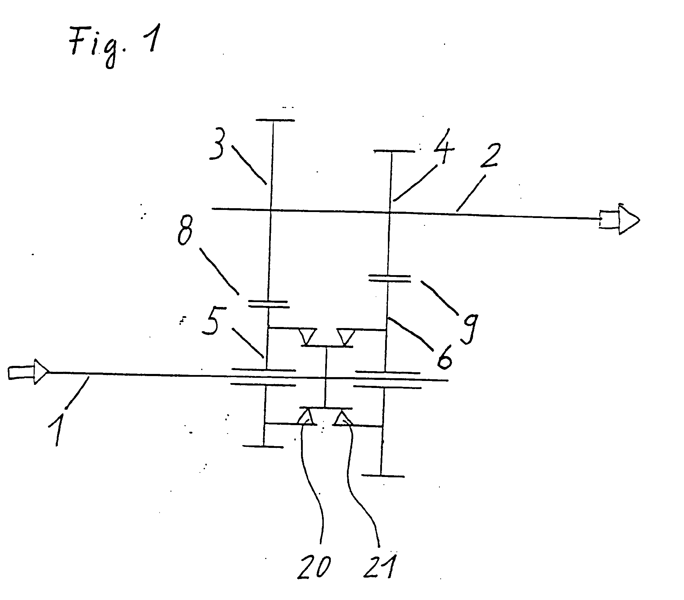

**Figur 1** zeigt ein Getriebe mit einer Eingangswelle 1 und einer Ausgangswelle 2. Die Drehmomentübertragung zwischen Eingangswelle 1 und Ausgangswelle 2 erfolgt wahlweise über einen Zahnradsatz 8 oder einen Zahnradsatz 9. Die Zahnradsätze 8,9 besitzen eine unterschiedliche Untersetzung, so dass bei gleicher Antriebsdrehzahl, je nach Drehmoment übertragendem Zahnradsatz 8,9, unterschiedliche Abtriebsdrehzahlen an der Ausgangswelle 2 entstehen. Von jedem Zahnradsatz 8, 9 ist jeweils ein Zahnrad als Festrad 3, 4 und jeweils ein Zahnrad als Losrad 5, 6 mit der zugehörigen Ausgangswelle 2 bzw. Eingangswelle 1 verbunden. Jeweils eines der Losräder 5, 6 ist über jeweils einen schaltbaren Freilauf 20, 21 mit der Eingangswelle 1 so verbindbar, dass Drehmoment übertragen werden kann. Ist die Zahnradstufe 8 in der ersten Gangstufe durch die Sperrung des Freilaufs 20 in Antriebsrichtung drehmomentübertragend in den Kraftfluss geschaltet, so ist das Losrad 6 über den Freilauf 21 von der Eingangswelle 1 entkoppelt. Von der ersten Gangstufe zur zweiten Gangstufe wird umgeschaltet, indem die Zahnradstufe 8 aus dem Kraftfluss genommen und die Zahnradstufe 9 in den Kraftfluss geschaltet wird. Dies geschieht durch Öffnen des Freilaufs 20 und schließen des Freilaufs 21. Damit wird das Losrad 6 mit der Eingangswelle 1 drehmomentübertragend verbunden, während das Losrad 5 aus der Drehmomentübertragung mit der Eingangswelle 1 genommen wird.

Eine weitere Möglichkeit des Umschaltens von der ersten Gangstufe zur zweiten Gangstufe ist, dass der Freilauf 21 geschlossen wird, ohne den Freilauf 20 zu öffnen. Hierdurch wird der Freilauf 20, durch Überrollen in Freilauffunktion, automatisch unter Vermeidung einer Zugkraftunterbrechung aus dem Kraftfluss genommen.

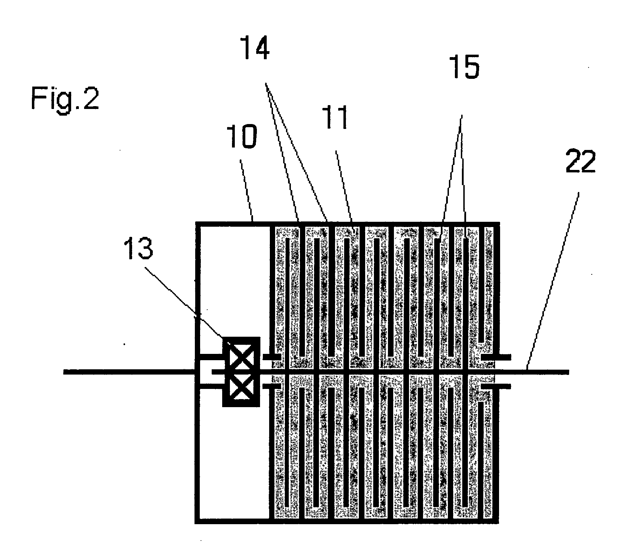

**Figur 2** zeigt eine schematische Darstellung eines Elements zur Übertragung von Drehmoment gemäß der Erfindung, insbesondere zur Verwendung als Schaltelement in einem Getriebe, zum Beispiel nach **Figur 1.**

Ein Raum 11 zwischen Lamellen 14,15 einer Antriebsseite 10 und einer Abtriebsseite 22 des Elements zur Übertragung von Drehmoment, bestehend aus einem symbolisch dargestellten schaltbaren Freilauf 13 und aus einer durch Elektroviskose in ihrem Reibverhalten steuerbaren Flüssigkeitsreibkupplung, ist mit einer elektrisch aktivierbaren elektroviskosen Flüssigkeit gefüllt (grau unterlegt dargestellt).

Elektroviskose Flüssigkeiten sind Flüssigkeiten, deren Viskosität einem angelegten elektrischen Feld proportional ist. Wird nun eine elektrische Spannung angelegt, erhöht sich die Viskosität dieser Flüssigkeit und die Drehmomentübertragungs- und Dämpfungseigenschaften verändern sich durch geänderte Flüssigkeitsreibungsverhältnisse. Diese Eigenschaft wird genutzt zum verschleißfreien Übertragen von Drehmoment, über die abwechselnd an- und abtriebsseitig gefesselten Lamellen 14,15, die sich nicht berühren.

Da die Flüssigkeitsreibung prinzipbedingt nur ausreicht, um eine Relativgeschwindigkeit nahe Null zwischen An- 10 und Abtriebsseite 22 des Elements zu erzielen, ist eine Einrichtung vorgesehen, welche Formschluß zwischen der An- 10 und Abtriebsseite 22 herstellt, wenn die Relativgeschwindigkeit nur noch sehr klein ist. Dies wird durch eine schaltbare Kupplung erreicht, hier als schaltbarer Freilauf 13 ausgebildet.

Die Funktionsweise eines solchen elektroviskosen Elementes in Kombination mit einem schaltbaren Freilauf 13 ist verschleißfrei. Dadurch ergeben sich Vorteile beim Wirkungsgrad des Schaltelements gegenüber Lamellenkupplungen nach dem Stand der Technik.

## Patentansprüche

1. Getriebe für ein Kraftfahrzeug, zur Drehmoment- und Drehzahlanpassung zwischen einem Antriebsmotor und einem Achsgetriebe des Kraftfahrzeugs, mit mindestens zwei Getriebewellen, einer Eingangswelle (1) und einer Ausgangswelle (2), und mit mehreren Zahnradsätzen (8,9) unterschiedlicher Untersetzung, von denen jeweils ein Zahnrad als Festrad (3,4) und das andere Zahnrad als Losrad (5,6) auf der Eingangs- (1) oder Ausgangswelle (2) gehalten ist und wobei jeweils das Losrad (5,6) zur Drehmomentübertragung mit der zugehörigen Getriebewelle über eine, insbesondere als schaltbarer Freilauf (13,20,21) ausgebildete, schaltbare Kupplung formschlüssig verbunden werden kann, **dadurch gekennzeichnet, dass** eine durch Elektroviskose in ihrem Reibverhalten steuerbare Flüssigkeitsreibkupplung mit der schaltbaren Kupplung so zusammenwirkt, dass die schaltbare Kupplung Formschluss erst dann herstellt, wenn bedingt durch den Einsatz der Flüssigkeitsreibkupplung, der Betrag der Relativgeschwindigkeit zwischen Losrad (5,6) und zugehöriger Getriebewelle unterhalb eines festgelegten Wertes liegt.

2. Getriebe nach Anspruch 1, **dadurch gekennzeichnet, dass** die Flüssigkeitsreibkupplung eine Lamellenkupplung ist.
